# EUROPEAN PATENT SPECIFICATION

(11) **EP 2 232 331 B1**
(45) Date of publication and mention of the grant of the patent: **09.02.2022**
(21) Application number: 08863889.5
(22) Date of filing: 17.12.2008
(51) Int. Cl.: G03B 15/00, H04N 5/232, G06K 9/46

(54) **DEVICE FOR HELPING THE CAPTURE OF IMAGES**
Vorrichtung zur Unterstützung der Bilderfassung
DISPOSITIF D'ASSISTANCE À LA CAPTURE D'IMAGES

(30) Priority: 20.12.2007 FR 0760170
(43) Date of publication of application: 29.09.2010
(73) Proprietor: InterDigital CE Patent Holdings, 75017 Paris (FR)
(72) Inventor: LE MEUR, Olivier, F-35160 Talensac (FR); CHEVET, Jean-Claude, F-35830 Betton (FR); GUILLOTEL, Philippe, F-35770 Vern sur Seiche (FR)
(74) Representative: Vidon Brevets & Stratégie
(86) International application number: PCT/EP2008/067685
(87) International publication number: WO 2009/080639

(56) References cited:
- EP-A- 1 695 288
- EP-A- 1 748 385
- WO-A-2007/088193
- WO-A1-2006/082967
- DE-A1-102005 041 633
- JP-A- 2003 185 458
- JP-A- 2005 341 449
- JP-A- 2006 285 475
- US-A1- 2002 126 990
- US-A1- 2002 191 861

## Description

### 1. Scope of the invention

The invention relates to the general field of image analysis. More particularly, the invention relates to a device for helping the capture of images and an image capture device comprising the help device.

### 2. Prior art

Currently, when a cameraman films a scene, besides the direct observation of the scene via the viewfinder of the camera, the only means that he has to ensure that the scene that he is filming is correctly framed is either by using a return channel, or by using oculometric tests.

The direct observation of the scene via a viewfinder does not always enable the cameraman to frame it correctly particularly in the case of rapid movement (e.g. sport scenes). It can also be difficult for him to determine how to frame a scene in the case where this scene comprises many regions of interest (e.g. in a panoramic view).

The use of a return channel enables for example the director to inform the cameraman that the image is poorly framed. Such a solution is however not satisfactory to the extent that it is not instantaneous.

However, the oculometric tests are difficult and take a long time to set up. Indeed, they need a representative panel of observers to be arranged. Furthermore, the results of these tests are not immediate and require a long phase of analysis.

US 2002/0191861 A1 discloses a method for automated and semi-automated cropping of electronic images. An electronic image is processed to identify one or more features relevant to the composition of the electronic image, each such feature having one or more compositionally significant properties from amongst a plurality of different predetermined compositional properties, and each such feature occupying a sub-region of the electronic image. Then one or more compositional rules are selected from a set of predetermined compositional rules, based on the relevance of the compositional rule(s) to the compositionally significant properties of one or more of the identified features. Then one or more suitable crop boundaries are determined by applying one or more of the selected compositional rules.

WO 2006/082967 A1 discloses an imaging device. By extracting image characteristic point position information by a characteristic point extraction unit and a characteristic point position calculation unit, a focus area formed by an image signal imaged by an imaging element and divided by an image division unit is made to follow motion of an object. Furthermore, for the characteristic point position information, a lower area portion of the temporal vibration frequency is extracted by a low pass filter, and a display position of the focus area selection unit is calculated and displayed on a display unit, thereby preventing giving an unpleasant feeling by fluctuation of the motion of the object in the focus area display on the display unit.JP2003185458 A relates to a navigation apparatus which allows a user to obtain register information relating to facility data obtained from a recording medium and perform processing using the register information.

### 3. Summary of the invention

The purpose of the invention is to compensate for at least one disadvantage of the prior art.

This is achieved by a device configured to help the capture of images as defined in claim 1 as well as by an image capture device as defined in claim 6. Advantageous refinements are subject of the dependent claims.

The device according to the invention simplifies the shot by supplying the cameraman with more information on the scene that he is filming.

According to a particular characteristic of the invention, the analysis means is configured to calculate an item of perceptual interest value for each pixel of the image.

According to a particular aspect of the invention, the circle is overlaid on the image in such a manner that it is centred on the pixel of the image for which the item of perceptual interest value is the highest.

According to a particular characteristic of the invention, the image is divided into pixel blocks and the analysis means is configured to calculate an item of perceptual interest value for each pixel block of the image.

According to an embodiment, the perceptual interest value of a region is calculated as the ratio between the sum of the perceptual interest values associated with the pixels belonging to said region and the sum of the perceptual interest values associated with all the pixels of the image.

The invention also relates to an image capture device comprising:
- a device for helping the capture of images according to one of the aforementioned claims, and
- a viewfinder, the device for helping the capture of images being configured to display the circle on the viewfinder.

The image capture device according to the invention helps the cameraman to correctly frame the scene that he is filming by informing him by means of the circles how to position the camera so that the image filmed is centred on one of the regions of interest of the scene.

### 4. List of figures

The invention will be better understood and illustrated by means of embodiments and implementations, by no means limiting, with reference to the annexed figures, wherein:
- figure 1 shows a device for helping the capture of images according to the invention,
- figure 2 illustrates a method for calculating perceptual interest data,
- figure 3 shows an image divided into pixel blocks each one of which is associated with an item of perceptual interest data,
- figure 4 shows an image on which is overlaid a graphic indicator in the shape of an arrow,
- figure 5 shows an image on which is overlaid four graphic indicators in the shape of arrows,
- figure 6 shows an image on which is overlaid two graphic indicators in the shape of a circle,
- figure 7 shows an image on which is overlaid two graphic indicators in the shape of a rectangle,
- figure 8 shows an image on which is overlaid a heat map representative of the saliency of the image,
- figure 9 shows an image on which is overlaid graphic indicators in the shape of a square and their barycentre,
- figure 10 shows an image capture device according to the invention,
- figure 11 shows an image in 16/9 format and a graphic indicator in the shape of a 4/3 format frame, and
- figure 12 shows an image in 4/3 format and a graphic indicator in the shape of a 19/9 format frame.

### 5. Detailed description of the invention

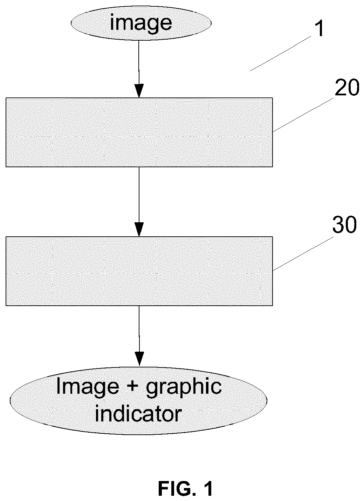

Figure 1 shows a device for helping the capture of images according to the invention.

The device for helping the capture of images comprises an analysis module 20 suitable to analyse an image having to be captured. More precisely, the module 20 analyses the visual content of the image to calculate perceptual interest data. An item of perceptual interest data can be calculated for each pixel of the image or for groups of pixels of the image, for example a pixel block. The perceptual interest data is used to determine the regions of interest in the image, i.e. zones attracting the attention of an observer.

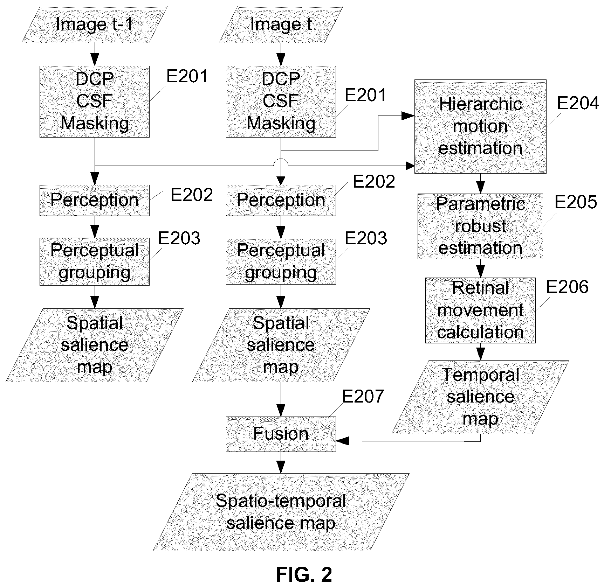

For this purpose, the method described in the European Patent EP 04804828.4 published on 30/06/2005 under the number 1695288 can be used to calculate for each pixel of the image an item of perceptual interest data also known as saliency value. This method illustrated by figure 2 consists in a first spatial modelling step followed by a temporal modelling step.

The spatial modelling step is composed of 3 steps E201, E202 and E203. During the first step E201, the incident image data (e.g. RGB components) are filtered to make them coherent with what our visual system would perceive while looking at the image. Indeed, the step E201 implements tools that model the human visual system. These tools take into account the fact the human visual system does not appreciate the different visual components of our environment in the same way. This sensitivity is simulated by the use of Contrast Sensitivity Functions (CSF) and by the use of intra and inter component visual masking. More precisely, during the step E201, a hierarchic decomposition into perceptual channels, marked DCP in figure 2, simulating the frequency tiling of the visual system is applied to the components (A, Cr1, Cr2) of the area of the space of antagonistic colours of Krauskopf, deduced from the RGB components of an image. From the frequency spectrum, a set of subbands having a radial frequency range and a particular angular selectivity is defined. Each subband can actually be considered to be the neuronal image delivered by a population of visual cells reacting to a particular frequency and orientation. The CSF function followed by a masking operation is applied to each subband. An intra and inter component visual masking operation is then carried out.
During the second step E202, the subbands from the step E201 are convoluted with a close operator of a difference of Gaussians (DoG). The purpose of the E202 step is to simulate the visual perception mechanism. This mechanism enables the visual characteristics containing important information to be extracted (particularly local singularities that contrast with their environment) leading to the creation of an economic representation of our environment. The organisation of the reception fields of the visual cells whether they are retinal or cortical fully meets this requirement. These cells are circular and are constituted by a centre and an edge having antagonistic responses. The cortical cells also have the particularity of having a preferred direction. This organisation endows them with the property of responding strongly on contrasts and of not responding on uniform zones. The modelling of this type of cell is carried out via differences of Gaussians (DoG) whether oriented or not. The perception also consists in emphasising some characteristics essential to interpreting the information. According to the principles of the Gestaltist school, a butterfly filter is applied after the DoG to strengthen the collinear, aligned and small curvature contours. The third step E203 consists in constructing the spatial saliency map. For this purpose, a fusion of the different components is carried out by grouping or by linking elements, a priori independent, to form an image understandable by the brain. The fusion is based on an intra component and on inter components competition enabling the complementarity and redundancy of the information carried by different visual dimensions to be used (achromatic or chromatic).

The temporal modelling step, itself divided into 3 steps E204, E205 and E206, is based on the following observation: in an animated context, the contrasts of movement are the most significant visual attractors. Hence, an object moving on a fixed background, or vice versa a fixed object on a moving background, attracts one's visual attention. To determine these contrasts, the recognition of tracking eye movements is vital. These eye movements enable the movement of an object to be compensated for naturally. The velocity of the movement considered expressed in the retinal frame is therefore almost null. To determine the most relevant movement contrasts, it is consequently necessary to compensate for the inherent motion of the camera, assumed to be dominant. For this purpose, a field of vectors is estimated at the step E204 by means of a motion estimator working on the hierarchic decomposition into perceptual channels. From this field of vectors, a complete refined parametric model that represents the dominant movement (for example translational movement) is estimated at the step E205 by means of a robust estimation technique based on M-estimators. The retinal movement is therefore calculated in step E206. It is equal to the difference between the local movement and the dominant movement. The stronger the retinal movement (by accounting nevertheless for the maximum theoretical velocity of the tracking eye movement), the more the zone in question attracts the eyes. The temporal saliency that is proportional to the retinal movement or to the contrast of movement is then deduced from this retinal movement. Given that it is easier to detect a moving object among fixed disturbing elements (or distracters) than the contrary, the retinal movement is modulated by the overall quantity of movement of the scene.
The spatial and temporal saliency maps are merged in the step E207. The fusion step E207 implements a map intra and inter competition mechanism. Such a map can be presented in the form of a heat map indicating the zones having a high perceptual interest.

The device for helping the capture of images 1 further comprises a display module 30 suitable to overlay on the image analysed by the analysis module 20 at least one graphic indicator of at least one region of interest in the image, i.e. a region having an item of high perceptual interest data. The position of this graphic indicator on the image and possibly its geometric characteristics depends on perceptual interest data calculated by the analysis module 20. This graphic indicator is positioned in such a manner that it indicates the position of at least one region of the image for which the perceptual interest is high. According to a variant, a plurality of graphic indicators is overlaid on the image, each of them indicating the position of a region of the image for which the perceptual interest is high.

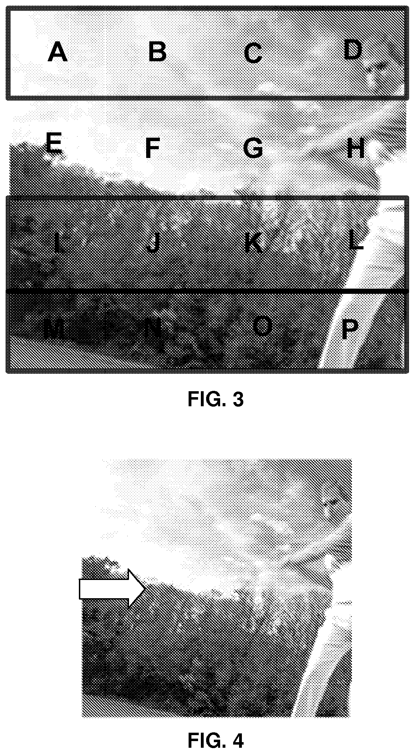

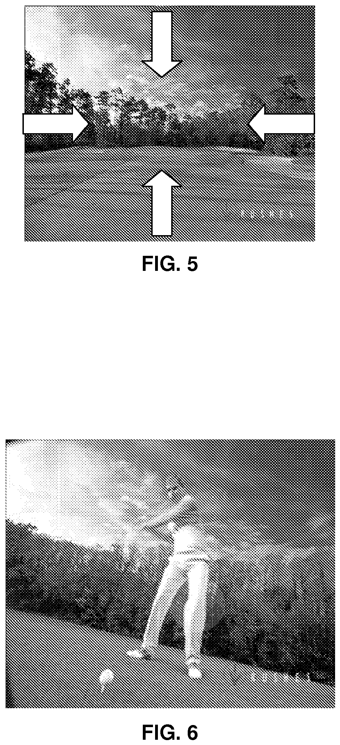

According to a first example not forming part of the present invention, the graphic indicator is an arrow. To position the arrow in the image, said image is divided into N blocks of pixels not overlapping. Assuming that N=16, as illustrated in figure 3, an item of perceptual interest data is calculated for each block. According to an embodiment, the item of perceptual interest data is equal to the sum of the perceptual interest data associated with each pixel of the block in question. According to a variant, the item of perceptual interest data associated with the block is equal to the maximum value of the perceptual interest data in the block in question. According to another variant, the item of perceptual interest data associated with the block is equal to the median value of the perceptual interest data in the block in question. The perceptual interest data is identified in figure 3 by means of letters ranging from A to P. The sum of some of this data is compared to a predefined threshold TH to determine the position of the arrow or arrows on the image. According to an embodiment, the following algorithm is applied:
If A+B+C+D>TH then an arrow graphic indicator pointing up is positioned at the bottom of the image indicating that the top of the image, namely the first line of blocks, is a region of high perceptual interest,
If A+E+I+M>TH then an arrow graphic indicator pointing to the left is positioned to the right of the image indicating that the left of the image, namely the first column of blocks, is a region of high perceptual interest,
If M+N+O+P>TH then an arrow graphic indicator pointing down is positioned at the top of the image indicating that the bottom of the image, namely the last line of blocks, is a region of high perceptual interest,
If D+H+L+P>TH then an arrow graphic indicator pointing to the right is positioned to the left of the image indicating that the right of the image, namely the last column of blocks, is a region of high perceptual interest as illustrated in figure 4,
If (F+G+J+K)>TH, then the centre of the image has a high perceptual interest with respect to the rest of the image. In this case, 4 arrows pointing to the centre of the image are overlaid onto the image as shown in figure 5. These 4 arrows can be replaced by a particular graphic indicator, for example a cross positioned at the centre of the image.
However, if almost the entire image has a high perceptual interest, it is advantageous to indicate to the cameraman that he must perform a zoom out operation to restore the region high perceptual interest in its context. For this purpose, 4 arrows pointing away from the image are overlaid on the image.

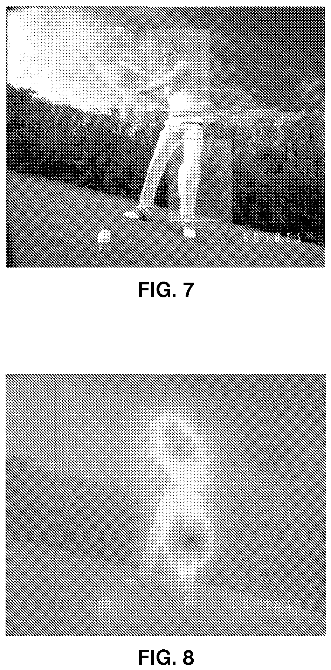

According to an embodiment of the invention, the graphic indicator is a disk of variable size shown transparently on the image as shown on figure 6. This graphic indicator is positioned in the image such that it is centred on the pixel with which the data item of the highest perceptual interest is associated. If several graphic indicators are positioned in the image then they are centred on the pixels with which the data of the highest perceptual interest is associated. According to a particular characteristic of the invention, at least one characteristic of the graphic indicator is modified according to a rate of perceptual interest also called rate of saliency. The rate of saliency associated with a region of the image is equal to the sum of the perceptual interest data associated with the pixels belonging to this region divided by the sum of the perceptual interest data associated with the pixels of the entire image. Hence, the thickness of the edge of the circle can be modulated according to the rate of saliency within said circle. The larger the thickness of the circle, the more salient is the region of the image within the circle with respect to the rest of the image. According to another variant, shown in figure 7, the disk is replaced by a rectangle of variable size. In this case, the width and/or the length of the rectangle is(are) modified according to the saliency coverage rate. According to another variant, the graphic indicator is a heat map representing the saliency map shown transparently on the image as illustrated on the figure 8. The color of the heat map varies locally depending on the local value of the perceptual interest data. This heat map is a representation of the saliency map.

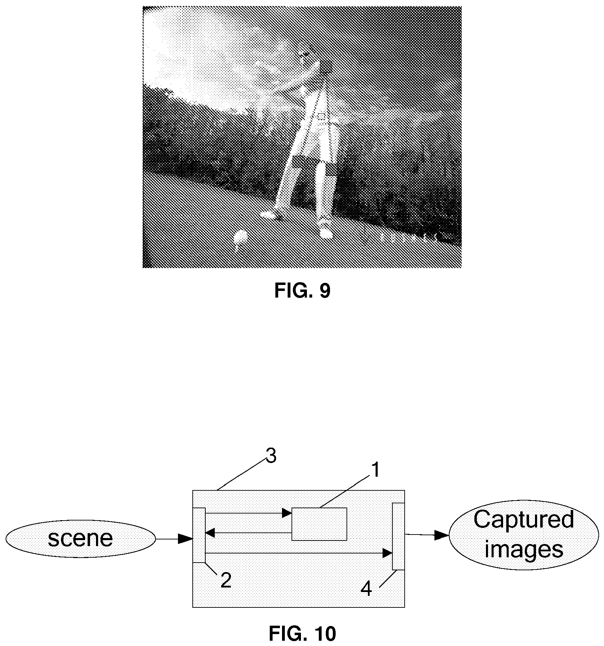

According to another example not forming part of the present invention, the graphic indicator is a square of predefined size. For example, the most salient n pixels, i.e. having an item of data of high potential interest, are identified. The barycentre of these n pixels is calculated, the pixels being weighted by their respective perceptual interest data. A square is then positioned on the displayed image (light square positioned on the stomach of the golfer on figure 9) in such a manner that it is centred on the barycentre.

With reference to figure 10, the invention also relates to an image capture device 3 such as a digital camera comprising a device for helping the capture of images 1 according to the invention, a viewfinder 2 and an output interface 4. The image capture device comprises other components well known to those skilled in the art such as memories, bus for the transfer of data, etc., that are not shown on figure 10. A scene is filmed using the image capture device 3. The cameraman observes the scene by means of the viewfinder 2, more particularly, he views by means of the viewfinder 2 an image that is analysed by the module 10 of the device for helping the capture of images 1. The module 20 of the device 1for helping the capture of images then displays, on the viewfinder 2, at least one graphic indicator that is overlaid on the image displayed by means of the viewfinder 2. Moreover, the images displayed by means of the viewfinder 2 are then captured by the image capture device 3 and stored in memory in the image capture device 3 or transmitted directly to a remote storage module or to a remote application by means of the output interface 4.

The display of such graphic indicators on the viewfinder 2 enables the cameraman who films the scene to move his camera so as to centre in the image displayed on the viewfinder 2 the visually important regions of the filmed scene. In figure 4, an arrow pointing to the right is positioned on the left of the image. This arrow advantageously informs the cameraman filming a golf scene that the high perceptual region of interest, namely the golfer, is located on the right of the image. This informs him of the way in which he must move his camera so that the high perceptual region of interest is at the centre of the filmed image. In figure 5, the 4 arrows inform the cameraman that he must perform a zoom in operation.

The graphic indicators advantageously enable the cameraman to ensure that the high perceptual regions of interest in a scene will be present in the images captured. They also enable the cameraman to ensure that these regions are centred in the captured images. Moreover, by modulating certain parameters of the graphic indicators, they enable the cameraman to give a hierarchy to the high perceptual regions of interest according to their respective rates of saliency.

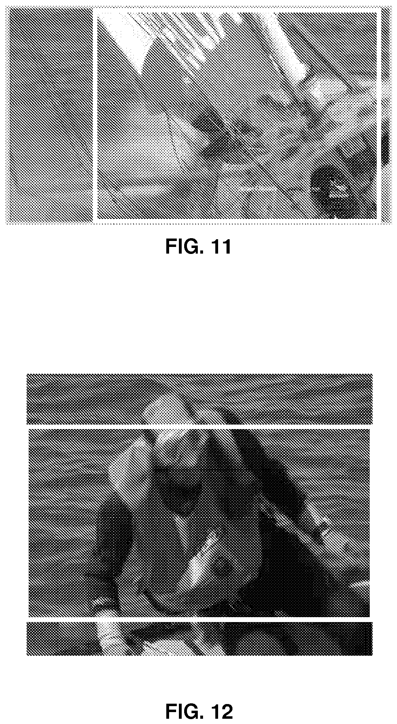

According to a particular example not forming part of the present invention, the graphic indicator is a frame of predefined size. According to the invention the viewfinder 2 is overlaid on the image such that it is centred on a region of the image having a high perceptual interest. This graphic indicator is advantageously used to represent on a captured image in the 16/9 format, a frame in the 4/3 format as illustrated by figure 11. The frame in the 4/3 format is an aid for the cameraman. Indeed, the cameraman can use this additional information to correctly frame the scene such that a film in the 4/3 format generated from the 16/9 format captured by the image capture device is relevant, i.e. notably that the high perceptual regions of interest in the scene are also present in the images in the 4/3 format. This graphic indicator thus enables the cameraman to improve the shot when he knows that the video content captured in the 16/9 format will subsequently be converted to the 4/3 format. Conversely in figure 12, an image is captured in the 4/3 format and a frame in the 16/9 format being overlaid on the image is displayed on the viewfinder 2. Naturally, the invention is not limited to the case of the 16/9 and 4/3 formats alone. It can also be applied to other formats. For example, the frame in the 4/3 format can be replaced by a frame in the 1/1 format, when the scene filmed must subsequently be converted into 1/1 format to be broadcast for example on a mobile network.

The invention is limited by the appended claims. The person skilled in the art may apply any variant to the stated embodiments and combine them to benefit from their various advantages as defined in the appended claims.

Furthermore, the graphic indicators can be displayed in superimpression on the control screen external to the image capture device instead of being displayed on the viewfinder of an image capture device.

## Claims

1. A device (1) configured to help the capture of images for an image capture apparatus provided with a display displaying an image to be captured, the device (1) comprising:
- an analysis means (20) configured to calculate a perceptual interest value for regions of an image that is to be captured and to determine regions of interest in the image as regions having a high value of the calculated perceptual interest,
- a display means (30) configured to overlay on the image displayed by the image capture device at least one circle indicating a position of at least one of the determined regions of interest,
**characterized in that**
the display means (30) is further configured to modify a thickness of said circle proportionally to the value of the calculated perceptual interest associated with the region of interest of the image covered by the circle.

2. The device (1) according to claim 1, wherein said analysis means (20) is configured to calculate an item of perceptual interest value for each pixel of said image.

3. The device (1) according to claim 2, wherein said circle is overlaid on said image in such a manner that it is centred on the pixel of the image for which the item of perceptual interest value is the highest.

4. The device (1) according to claim 1, wherein said image is divided into pixel blocks and said analysis means (20) is configured to calculate an item of perceptual interest value for each pixel block of said image.

5. The device (1) according to any of the preceding claims, wherein the perceptual interest value of a region is calculated as the ratio between the sum of the perceptual interest values associated with the pixels belonging to said region and the sum of the perceptual interest values associated with all the pixels of the image.

6. An image capture device (3), the device (3) comprising:
- a device (1) for helping the capture of images according to one of the preceding claims, and
- a viewfinder (2),
wherein said device for helping the capture of images (1) is configured to display said circle on said viewfinder (2).

## Patentansprüche

1. Vorrichtung (1), die dafür konfiguriert ist, Bilder für ein Bildaufnahmegerät, das mit einer Anzeige versehen ist, die ein aufzunehmendes Bild anzeigt, aufnehmen zu helfen, wobei die Vorrichtung (1) umfasst:
- ein Analysemittel (20), das dafür konfiguriert ist, für Gebiete eines Bilds, die aufgenommen werden sollen, einen Wahrnehmungsinteressewert zu berechnen und interessierende Gebiete in dem Bild als Gebiete mit einem hohen berechneten Wahrnehmungsinteressewert zu bestimmen,
- ein Anzeigemittel (30), das dafür konfiguriert ist, dem durch die Bildaufnahmevorrichtung angezeigten Bild mindestens einen Kreis zu überlagern, der eine Position mindestens eines der bestimmten interessierenden Gebiete angibt,
**dadurch gekennzeichnet, dass**
das Anzeigemittel (30) ferner dafür konfiguriert ist, eine Dicke des Kreises proportional zu dem berechneten Wahrnehmungsinteressewert, der dem durch den Kreis bedeckten interessierenden Gebiet des Bilds zugeordnet ist, zu ändern.

2. Vorrichtung (1) nach Anspruch 1, wobei das Analysemittel (20) dafür konfiguriert ist, für jedes Pixel des Bilds einen Wahrnehmungsinteresseobjekt-Wert zu berechnen.

3. Vorrichtung (1) nach Anspruch 2, wobei der Kreis dem Bild in einer Weise überlagert wird, dass er in demjenigen Pixel des Bilds, für das der Wahrnehmungsinteresseobjekt-Wert am höchsten ist, zentriert ist.

4. Vorrichtung (1) nach Anspruch 1, wobei das Bild in Pixelblöcke unterteilt wird und wobei das Analysemittel (20) dafür konfiguriert ist, für jeden Pixelblock des Bilds einen Wahrnehmungsinteresseobjekt-Wert zu berechnen.

5. Vorrichtung (1) nach einem der vorhergehenden Ansprüche, wobei der Wahrnehmungsinteressewert eines Gebiets als das Verhältnis zwischen der Summe der Wahrnehmungsinteressewerte, die den zu dem Gebiet gehörenden Pixeln zugeordnet sind, und der Summe der Wahrnehmungsinteressewerte, die allen Pixeln des Bilds zugeordnet sind, berechnet wird.

6. Bildaufnahmevorrichtung (3), wobei die Vorrichtung (3) umfasst:
- eine Vorrichtung (1), um Bilder aufnehmen zu helfen, nach einem der vorhergehenden Ansprüche, und
- einen Sucher (2),
wobei die Vorrichtung, um Bilder (1) aufnehmen zu helfen, dafür konfiguriert ist, den Kreis in dem Sucher (2) anzuzeigen.

## Revendications

1. Dispositif (1) configuré pour aider à la capture d'images pour un appareil de capture d'images doté d'un écran affichant une image à capturer, le dispositif (1) comprenant :
- un moyen d'analyse (20) configuré pour calculer une valeur d'intérêt perceptuel pour des régions d'une image à capturer et pour déterminer des régions d'intérêt dans l'image comme étant des régions ayant une valeur d'intérêt perceptuel calculé élevée.
- un moyen d'affichage (30) configuré pour superposer à l'image affichée par le dispositif de capture d'images au moins un cercle indiquant une position d'au moins l'une des régions d'intérêt déterminées,
**caractérisé en ce que**
le moyen d'affichage (30) est en outre configuré pour modifier une épaisseur dudit cercle proportionnellement à la valeur de l'intérêt perceptif calculé associée à la région d'intérêt de l'image couverte par le cercle.

2. Dispositif (1) selon la revendication 1, dans lequel ledit moyen d'analyse (20) est configuré pour calculer un élément de valeur d'intérêt perceptuel pour chaque pixel de ladite image.

3. Dispositif (1) selon la revendication 2, dans lequel ledit cercle est superposé à ladite image de telle sorte qu'il soit centré sur le pixel de l'image dont l'élément de valeur d'intérêt perceptuel est le plus élevé.

4. Dispositif (1) selon la revendication 1, dans lequel ladite image est divisée en blocs de pixels et ledit moyen d'analyse (20) est configuré pour calculer un élément de valeur d'intérêt perceptuel pour chaque bloc de pixels de ladite image.

5. Dispositif (1) selon l'une quelconque des revendications précédentes, dans lequel la valeur d'intérêt perceptuel d'une région est calculée comme étant le rapport entre la somme des valeurs d'intérêt perceptuel associées aux pixels appartenant à ladite région et la somme des valeurs d'intérêt perceptuel associées à tous les pixels de l'image.

6. Dispositif de capture d'image (3), le dispositif (3) comprenant :
- un dispositif (1) d'aide à la capture d'images selon l'une des revendications précédentes ; et
- un viseur (2),
dans lequel ledit dispositif d'aide à la capture d'images (1) est configuré pour afficher ledit cercle sur ledit viseur (2).
